# EUROPEAN PATENT APPLICATION

(11) **EP 4 123 089 A1**
(43) Date of publication of application: **25.01.2023**
(21) Application number: 22397504.6
(22) Date of filing: 14.07.2022
(51) Int. Cl.: D21H 19/16, D21H 23/50, B05B 5/03, B05D 1/06, B32B 29/04

(54) **METHOD OF PRODUCING A COATED FIBROUS ARTICLE**

(30) Priority: 21.07.2021 FI 20215817
(71) Applicant: Teknos Group Oy, 00371 Helsinki (FI)
(72) Inventor: JUVONEN, Marja, 02750 Espoo (FI); AALTO-HÄNNINEN, Nina, 15140 Lahti (FI)
(74) Representative: Laine IP Oy

(57) **Abstract**

Method of producing a coated fibrous article and coated articles thus obtained. The method comprises the steps of providing a fibrous article having a surface; providing polymeric particles; forming a layer of the particles; and consolidating the layer and pressing it onto the surface to form a polymeric matrix coating on the surface of the article. The articles are fully recyclable and exhibit excellent barrier properties against grease and water.

## Description

### Field of the Invention

The present invention relates to the production of fibrous articles, which have new or improved properties. In particular, the invention concerns a method of producing coated fibrous articles exhibiting, for example improved barrier properties, improved fire-resistance or antimicrobial properties or predetermined visual or tactile properties. The invention also concerns coated fibrous articles, such as coated planar or 3D-shaped articles.

### Background

Fibrous materials, such a cellulosic or lignocellulosic materials and similar materials of natural fibers are typically hydrophilic and porous, and exhibit poor or lacking properties in many respects. Thus, e.g. their barrier properties against water, oil and grease and poor. It is known in the art to improve the barrier properties of paperboard by the use of extrusion coating with thermoplastic materials. Alternatively, platy pigments have been applied onto fibrous webs by dispersion coating on paperboard machines. These known solutions impair recyclability of the materials or require the use of high amounts of water and are energy consuming.

There is a need for new and improved methods of coating fibrous articles for producing articles having new or improved properties.

### Summary of the Invention

It is an object of the invention to provide a method of producing coated fibrous articles.

In one embodiment, the present invention comprises a method of producing a coated fibrous article by the steps of
- providing a fibrous article having a surface;
- providing polymeric particles;
- forming a layer of the particles; and
- pressing it onto the surface to form a polymeric coating on the surface of the article.

It is another object of the invention to provide novel coated fibrous articles.

In one embodiment, a coated fibrous article exhibits a coating formed by a thermoplastic polymer or thermosetting polymer or combinations thereof on its surface.

More specifically, the present invention is characterized by what is stated in the characterizing part of the independent claims.

Considerable advantages are obtained by the invention. Thus, by the present invention, fibrous articles having excellent properties can be attained.

Typically, the coated articles can be conferred properties of barrier against liquids and gases, such as water, oil (including fat penetration and mineral oil migration), oxygen and steam. In one embodiment, the coated articles exhibit one or more of the following barrier properties:
- Olive oil resistance: no stain after two hours, at a temperature of 40 °C,
- Cobb 24 h: less than 10 g/m², at a coating amount 30 g/m², and
- WVTR (23 ⁰C, 50% RH): less than 75 g/m²/24 h, at a coating amount of 30 g/m².

In addition to or instead of barrier properties the present articles can be conferred other properties, such as technical properties of fire-resistance, antimicrobial, anticorrosion, conductivity, insulation, sound-proofing, UV protection, heat reflection, scratch resistance and combinations thereof, and/or esthetic and technical properties, such as visual or tactile and/or haptic ("look and feel") properties. The present articles can also be conferred a predetermined color.

Furthermore, the present process is fast and produces, e.g., good barrier properties and other desired properties already at relatively small thicknesses.

No separate adhesive layer is required, which reduces costs and enhances the ease of recycling and repulping of the materials by conventional industrial processes. After pulping, the separated coating layers will be free from adhesive residues.

In one embodiment, electrostatic coating is combined with pressing to achieve a good barrier by a thin, typically consolidated polymeric matrix or film bonded to the fibrous surface without the use of solvents or separately added binders.

In one embodiment, the present invention allows for forming fully biodegradable, typically thin, barrier layers of polymeric materials, in particular thermoplastic materials, based on, for example, biopolymers.

The present technology is applicable not only to generally planar articles, such as webs and sheets, but also to articles having a three-dimensional shape which can be regular or even irregular. Such articles can be produced by 3D molding.

### Description of Embodiments

Unless otherwise stated herein or clear from the context, any percentages referred to herein are expressed as percent by weight based on a total weight of the respective composition.

Unless otherwise stated, properties that have been experimentally measured or determined herein have been measured or determined at room temperature. Unless otherwise indicated, room temperature is 23°C.

Unless otherwise stated, properties that have been experimentally measured or determined herein have been measured or determined at atmospheric pressure.

It must also be noted that, as used in the specification and the appended claims, the singular forms "a," "an" and "the" include plural referents unless otherwise specified.

As used herein, the term "about" refers to a value which is ± 5% of the stated value.

As used herein, the term "average particle size" refers to the number average particle size based on a largest linear dimension of the particles (also referred to as "diameter") as determined using a technique known to those skilled in the art, such as Scanning Electron Microscopy, Transmission Electron Microscopy, and/or a Light Scattering technique.

In particular, the term "average particle size" denotes the D₅₀ value of the cumulative volume distribution curve at which 50 % by volume of the particles have a diameter less than that value.

As used herein, the pressure is given in units of bar, expressing - unless otherwise indicated - the pressure in addition to ambient pressure also referred to as "normal pressure" which is exerted on the indicated objects. Thus, a pressing pressure (surface pressure) of, e.g., 1 bar stands for an absolute pressure of 2 bar.

As used herein, the term "recyclable" denotes or refers to material which is capable of being reused for providing new products. "Recycling" refers to a process of utilizing recyclable materials for providing new products.

As used herein, "biopolymer" stands for polymers produced from natural sources either chemically synthesized from a biological material or entirely biosynthesized by living organisms.

As used herein, "biodegradable" generally stands for materials that can be biologically degraded by living organisms down to the base substances, such as water, carbon dioxide, methane, basic elements and biomass. The biodegradability of the present material in particular in terms of compostability can be assessed by EN 14046, ISO 14852:2004, ISO 14853:2004 and ISO 13975:2012. Degradability can also be assessed using standards ISO 18830 and ISO 19679 for aerobic biodegradation for instance in the seawater/sediment interface.

As used herein, "consolidate" stands generally for "making firm" in particular with reference to joining polymeric particles together to make a polymer matrix or polymeric film or polymeric layer.

As used herein, the terms "polymeric film" and "polymeric matrix" have the conventional meaning in the art. Generally, "polymeric film" stand for a thin, continuous material having a thickness of up to about 500 µm, in embodiments about 200 µm or less. Generally, "polymeric matrix" stands for a continuous polymeric phase which may contain other components, such as particles or fibers. In one embodiment, the particles or fibers are dispersed in the polymeric matrix.

As used herein, a "polymeric coating" can comprise either a polymeric film or a polymeric matrix or a combination thereof, optionally in addition to other components.

As used herein, "powder coating" refers in particular to coating applied as a free-flowing, dry powder. In embodiments, the powder coating is applied electrostatically. In embodiment, the coating will have a thickness of about 1 to 500 µm.

In embodiments of the present technology, fibrous articles are provided with a polymeric coating comprising a polymeric film or matrix to confer new surface properties, for example properties of improved barrier, of increased smoothness, of reduced porosity or combinations thereof or other technical properties, onto at least a part of the surface of the articles. The articles can also, by means of the coating, be conferred predetermined visual or haptic properties, such as predetermined visual appearance, for example imitating that of another material, or a predetermined color, or a modified tactility.

In a first step, a fibrous article is provided. Typically, the fibrous articles are solid objects, which are at least partially or preferably primarily composed of fibrous material and which have a surface that can be coated to modify its properties. The surface to be coated can comprise a part of the surface of the article or the whole surface of the article.

In one embodiment, the fibrous articles are selected from objects, which have at least one surface, which has hydrophilic properties or which is porous. Alternatively, the objects are porous and exhibit at least one surface, which has hydrophilic properties. The objects can have a plurality of surfaces that are coated.

The fibrous articles can be stand-alone articles. In one embodiment, they are "self-supporting" in the respect that they can form a structure that will not break or fold under its own weight.

The fibrous articles can also be articles, which in themselves form a part of another object. Examples include coatings or coverings of substrates, such as coatings and coverings of plates, boards or panels. Thus, in a first step, for example a sheet or web or other fibrous article is coated as disclosed herein and, in a second step, the coated article is transferred onto and adhered to a second product. In this way, predetermined properties can be conferred to that second product.

According to one embodiment, the fibrous article is selected from the group of webs, sheets, films, strips, panels, boards, blanks and similar, typically planar objects that generally have a 2D shape.

According to one embodiment, the fibrous article is selected from the group of webs, sheets, films and objects having a 3D shape.

Thus, the articles can comprise webs, sheets or films of natural fibers, such as cellulosic or lignosellulosic fibers, or man-made fibers, such as regenerated fibers (such as regenerated cellulosic fibers) or thermoplastic fibers, or mixtures of natural fibers and man-made fibers.

Further, the strips, panels, boards, blanks can comprise porous materials, such as wooden materials or man-made materials.

In one embodiment, the articles comprise papers, paperboards, non-woven tissues or films or sponges.

Natural fibers, in particular cellulosic or lignosellulosic fibers, can be produced by any defibering or pulping method from suitable raw-materials, such as from lignocellulosic materials, including wood, annual plants, and perennial plants and combinations thereof.

The wood can be deciduous (hardwood) or coniferous (softwood), such as birch, aspen, poplar, beech, alder, eucalyptus, mixed tropical hardwood, spruce, pine and fir. Examples of annual or perennial plant fiber sources (non-wood fiber sources) include cotton, linen, flax, hemp, kenaf, bamboo, reed canary grass, tall fescue, meadow fescue, goat's rue, and lucerne.

Examples of defibering methods include mechanical methods, such grinding or refining using for example, the Ground Wood (GW or SGW), or Pressure Ground Wood (PGW) processes; refiner mechanical pulping (RMP) or thermomechanical pulping (TMP); and chemimechanical pulping, such as chemi-thermomechanical (CTMP), semichemical (SC) or Neutral Sulfite Semi Chemical (NSSC) pulping. The defibering methods for producing fibers for the papers or paperboard articles can also include chemical pulping methods, such as sulphate pulping, sulphite pulping, polysulphide pulping, soda pulping, and organosolv pulping.

The fibers can be refined or non-refined. The fibers making up the object can also comprise mixtures of refined and non-refined fibers.

The articles can comprise one or several layers of fibrous matrix, each layer containing the same or different kinds of fibers. Thus, in one example, the fibrous article comprises a paper web or sheet consisting of a single layer of a chemical or mechanical fibers. In another example, the fibrous article comprises a multi-layered cardboard web or sheet, comprising or consisting of, for example, at least one surface layer and one bulk layer beneath or between surface layer(s). The surface layer(s) can be formed by cellulosic pulp and the bulk layer of mechanical pulp, such as in a folding box board suitable for food packaging.

The articles can also comprise man-made fibers typically selected from the group of regenerated fibers, such as viscose fibers or lyocell fibers, and thermoplastic fibers. Examples of thermoplastic fibers include polyesters, such as PET, or polylactide, polylactic acid, polyglycolide, polyglycolic acid, copolymers of lactic and glycolic copolymers, polycaprolactone, and other biopolymers derived from renewable sources, as well as polyolefins, polyamides, polyimides, polycarbonates.

In one embodiment, the weight ratio between natural fibers and man-made fibers is 0:100 to 100:0, in particular 20:80 to 100:0. In one embodiment, 50 to 100 wt.% of weight of the fibers is formed by natural fibers and up to 50 wt.% by man-made fibers.

The 2D objects generally have a smallest dimension, which is less than 30 mm, such as less than 20 mm or less than 15 mm, or 10 mm or less, for example 0.01 to 10 mm.

In case of articles selected from papers, paperboards, non-woven tissues, films and sponges, their basis weight is typically 20 to 1000 g/m², for example 25 to 500 g/m², or 30 to 300 g/m², and their thickness 50 to 1000 µm, for example 90 to 500 µm.

In one embodiment, the surface of the articles to be coated is free from pigments, surface sizing or both.

In one embodiment, the surface of the article to be coated is generally smooth, typically having a Bendtsen Roughness (ISO 8791-2) of less than 500 ml/min, for example less than 250 ml/min, such as less than 100 ml/min.

In another embodiment, the surface of the article to be coated has a Bendtsen Roughness (ISO 8791-2) of 500 ml/min or more, in particular at least 1000 ml/min, for example up to 3000 ml/min.

In one embodiment, the surface of the article is porous. TAPPI Test Method T460, the Gurley densometer porosity s/cm³ is generally smaller than 20 (s/cm³), for example 10 (s/cm³) or less.

According to one embodiment, the article to be coated is porous. One measure of porosity is the ratio between the total volume of holes in the material to the total volume of the material, expressed in percent. Expressed in such terms, the porous articles generally have a porosity of 5 to 90 %, typically, 10 to 75 %, for example 20 to 60 %.

In another embodiment, the fibrous articles are selected from the fibers or filaments obtained by defibering of the above-described raw-materials.

In the case of generally two-dimensional (2D) and/or planar articles, the objects to be coated have two predominant, generally opposite surfaces, and the coating will be applied on either or both of said surfaces. It can, however, also be applied on any sidewalls interconnecting the surfaces.

Further objects include strips, panels, boards, blanks and similar objects of porous materials. Examples include wood-based objects, such as lumber and sawn wood, wood veneer and veneer-based boards and panels, such as plywood and laminated veneer lumber (lvl), particleboards, oriented strand boards, low, medium and high density fiber boards, and combinations thereof.

In one embodiment, the coated objects have a 3D-shape. In such a case they exhibit a smallest dimension of 30 mm, in particular of 35 mm or more, thus including some of the above mentioned strips, panels, boards and blanks.

Typically, the 3D-shaped objects comprise the same materials as discussed above. The shape of the object can be regular, e.g. a polyhedron. The shape of the object can also be non-polyhedric or irregular, such as those of kitchen utensils, cups, bowls, and cutlery.

As will become evident, embodiments of the present invention can be carried out by in-mold/on-mold technology, which provides for the forming in a mold of an object of a fibrous material having a predetermined shape and coating at least a part of or all the surface of that object during molding.

Based on the foregoing, in one particular embodiment, the fibrous article is selected from articles containing cellulosic, lignocellulosic and regenerated cellulosic materials, such as pulp, paper, films, paperboards. In another embodiment, the fibrous article is selected from fibrous boards and panels, wooden objects. In a third embodiment, the fibrous article is selected from shaped fibrous articles, for example in the form of cups, bowls, and cutlery.

In a second step, polymeric particles are provided. Typically, the particles provided are formed into a layer which is pressed onto the surface of the article to form a coating on the surface.

An embodiment comprises the steps of consolidating the particles into a layer and pressing the layer onto the surface of the article. It can be carried out in a sequence of
- forming the particles into a layer in which the particles are at least partially bonded to each other, and then pressing the layer onto the surface of the article, or
- by simultaneously contacting the surface of the article with an unconsolidated particle layer, i.e. a layer of loose particles, and pressing that layer onto the surface to form a layer, in particular a consolidated layer, which is at least partially simultaneously, i.e. during the pressing step, attached to the surface.

In one embodiment, a layer of polymeric powder is transferred from a substrate, such as a surface, in particular a metal surface, onto the final object.

In one embodiment, an at least partially consolidated layer of polymeric particles is transferred from a substrate, such as a metal surface, onto the final object.

In one embodiment, the metal surface is smooth.

In one embodiment, the polymeric particles are provided in the form of a powder.

In one embodiment, the polymeric particles are provided in the form of a powder having a solids content of at least 95 % by weight, e.g. at least 97 % by weight, calculated from the total weight of the powder. Such a powder contains 5 % or less, e.g. 3 % or less, by weight of water (moisture). In one embodiment, the powder is essentially dry.

In one embodiment, a powder of polymeric particles is obtained:
- by melt mixing of the components followed by grinding,
- by spray drying of the components, or
- by dry mixing of the components in the form of dry powders.

In one embodiment, the polymeric particles are applied by powder coating using essentially dry powder.

By powder coating of the articles, wetting of the surface of the fibrous article (any prolonged drying times) can be avoided.

In one embodiment, the polymeric particles are provided in the form of an aqueous slurry. Thus, the particles, e.g. obtained by grinding of a raw-material, are suspended in water to provide a slurry having a solids content of 1 to 99 wt%, preferably 20 to 80 wt%. In one embodiment of this process, a powder slurry process is use for coating. Preferably, in the process a powder of particles having a particle size in the range of 1 to 50 µm, in particular about 1 to 20 µm are dispersed in water. The process allows for production of smooth coatings with small thickness.

In both embodiments, the particles have an average particle size of less than 250 micron, in particular less than 150 micron, for example about 50 to 100 micron.

In one embodiment, the polymeric particles are selected from particles of thermoplastic materials, thermosetting materials and combinations thereof. The particles can be obtained by grinding, for example cryogrinding, or refining a starting polymeric material to a predetermined particle size. The starting material may further contain fillers selected from organic and inorganic materials, such as organic or inorganic particles, fibres and fibrils.

In one embodiment, the particles comprise biopolymer particles mixed with one or more of non-biopolymeric thermoplastics, inorganic materials and combinations thereof. In particular, in such a mixture, the biopolymer particles form up to 100 %, for example 50 to 100 %, such as 75 to 100 % or 85 to 100 %, of the total particles content, based on weight.

In one embodiment, the polymeric particles comprise a polymeric material, in particular a thermoplastic polymeric material, selected from polyesters. For example the polymeric material can be a thermoplastic material selected from bio-based polymeric materials, in particular polyester material, such as polylactic acid, polylactide, polyglycolic acid, polyglycolide, copolymers of lactic acid and glycolic acid, polycaprolatone, polybutylene adipate terephthalate, polybuthylene succinate, polyglycolic acid, polyhydroxyalkanoate, and polyethylene glycol. The material can also comprise monomers and oligomers of one or more of afore-mentioned polymers and copolymers optionally in combination with polysiloxanes and monomers (such as silanes, alkoxysilanes, alkylalkoxysilanes and combinations thereof) and oligomers thereof.

In one embodiment, the polymeric particles comprise a reaction product of polyester and siloxane monomer, oligomer or polymer. Such a reaction product can be obtained by melt-compounding of the reactants, in particular by melt-compounding of the polyester and siloxane monomer, oligomer or polymer at a temperature above the melting point of the polyester, typically about 70 to 250 °C.

Preferably, the polymeric material, including the reaction product mentioned, has a number average molecular weight of 2,000 to 1,500,000 g/mol, preferably 2,500 to 50,000 g/mol.

In one embodiment, biopolymers of the afore-mentioned kind are used, having a melting point of 70 °C or more, in particular 80 °C or more, typically no higher than about 180 °C.

In one embodiment, the composition of polymeric particles consists of polymeric particles of biopolymer particles according to the previous embodiments.

In one embodiment, the polymeric particles comprise particles selected from the group of proteins, polysaccharides, polyphenols, resins and waxes.

In one embodiment, the composition of the polymeric particles further comprises fibers or fibrils of lignocellulosic or cellulosic materials.

In one embodiment, the polymeric particles are selected from particles of a thermosetting polymer, in particular thermosetting polymers containing cross-linking functional groups, such as functional groups selected from epoxide, glycidyl, amine, allyl, vinyl, anhydride, oxetane, acrylate, alkenyl, alkynyl and thiol groups.

In one embodiment, a composition of polymeric particles is provided, which contains (in addition to the polymeric particles) inorganic or organic materials, for example in particulate form. Such materials can be selected from components which are capable to conferring properties of barrier properties, for example platy particles, such as talc or kaolin, as well as from components, which are capable of conferring properties of fire-resistance, such as inorganic salts (for example salts of phosphoric acid, phosphonic acid, boric acid, formic acid or citric acid or combinations thereof), antimicrobial (antibacterial or antiviral), such as antimicrobial compounds (e.g. inorganic or organic biocides, such as propioconazole, tebuconazole or cypermethrin, or IPBC (3-iodo-2-propynyl butyl carbamate) or combinations thereof, or tall oil, tall oil fractions or derivatives, or soap or silver compounds or complexes, anticorrosion, conductivity, (thermal) insulation, sound-proofing, UV protection, heat reflection, scratch resistance, and combinations thereof, and/or esthetic properties, such as visual or tactile and/or haptic ("look and feel") properties. The compositions may contain inorganic or organic color pigments.

Typically, the content of inorganic or organic materials, other that the polymeric particles, is 0.01 to 50 wt%, preferably 1 to 40 wt%, of the total weight of the composition. Thus, for example, for achieving or improving fire-resistance, the content of inorganic salts is typically 1 to 30 wt% of the total weight of the composition, for achieving or improving antimicrobial properties, the content is typically 0.01 to 5 wt% of the total weight of the composition. For inorganic or organic materials used for achieving properties of anticorrosion, conductivity, (thermal) insulation, sound-proofing, UV protection, heat reflection, scratch resistance are typically employing in amounts of about 0.1 to 10 wt% of the total weight of the composition. For inorganic pigments and organic color pigments, the concentration is typically about 0.01 to 10 wt% of the total weight of the composition.

In one embodiment, a layer containing at least 5 g/m² of a powder of polymeric particles, optionally containing other components, as explained above, is provided. In particular, a layer is provided which contains at least 10 g/m², preferably at least 15 g/m² and up to 250 g/m² of a polymeric particles powder.

The particles provided, optionally consolidated, and pressed onto the surface of the article, form a coating on the surface. During the pressing, preferably a surface pressure of at least 1.1 bar (abs), in particular 1.5 to 30 bar (abs), in particular about 1.9 to 12 bar (abs) is applied on the layer.

In one embodiment, the pressing is carried out at an "elevated temperature", which stands for a temperature typically higher than room temperature. In particular, the temperature is generally in the range of 50 to 300 °C.

For example, when the polymeric particles comprise a thermoplastic material having a melting point, the temperature is in one embodiment as high or in some embodiments higher than the melting point during at least a part of, in some embodiments during all of, the duration of the pressing stage. In one embodiment, the temperature during the pressing stage is at least 70 °C, for example at least 80 °C, such as 85 to 185 °C, or 90 to 170 °C or 100 to 165 °C or 105 to 160 °C.

For polymeric particles comprising thermosetting materials, the temperature is in one embodiment selected such that at least partial cross-linking is achieved during the pressing stage.

Generally, the heating can be carried out for example in an oven or in a heated press or in a combination thereof.

As a result of the pressing and heating, the polymeric particles will be consolidated by fusing or melting into a polymeric film or matrix which is attached to the surface of the article during pressing.

Pressing can be carried out continuously or discontinuously. It can be carried out in one or several (e.g. 2 to 5) consecutive steps.

In one embodiment, heating and pressing are carried out in a succession of heating or pressing steps or in at least one simultaneous heating and pressing step.

In one embodiment, pressing is carried out in a mechanical press, such as a plate press, using pressing plates, in which heat is supplied by electric heating, oil heating or steam heating (using superheated steam). In particular, it is preferred that at least one of the pressing plates is heated by any of the afore-mentioned means.

In one embodiment, at least one of the pressing plates is coated with a release layer, such as a layer of a polymer. In one embodiment, the pressing plate(s) is/are coated with a fluoro resin, such as tetrafluoroethylene, layer or with a silicone layer

In one embodiment, at least one of the pressing plates is perforated to allow for removal of steam during heating.

In one embodiment, the press comprises at least one moving plate and at least one stationary pressing plate. In one embodiment, the press comprises two moving plates.

In one embodiment, the article is first fed into the press between the two press plates, and onto the surface of the article is then a layer of the polymeric particles formed. The press is closed while heating at least the plate which contacts with the layer of the polymeric particles so as to melt and optionally consolidate the particles and to press the thus formed or forming polymer film or matrix onto the surface of the article.

In one embodiment, the pressing is carried out in a nip formed between two heated rolls. This can be carried out in particular for an article which has on top of its surface an at least partially consolidated coating.

The press can be, for example, a hydraulic press or an electromechanical press.

In one embodiment, the surface is subjected to pressing in a 3D-mold. Thus, one embodiment comprises carrying out the following steps in the mold:
- providing a powder containing polymeric particles;
- forming a layer of the powder, for example by powder coating; and
- subjecting the powder layer to heat and pressing in order to form a polymer coating, for example in the form of a polymer film or polymer matrix, on the surface of the article.

In one embodiment, during molding, the particles can be deposited on a surface of the fibrous material before the closing of the mold and before application of pressure and heat on the material.

In one embodiment, the particles are applied separately onto the surface of a first mold part of the mold and the fibrous material onto the surface of a second mold part, the layer on the first mold part being transferred onto the surface of the material disposed on the second mold part upon closing of the mold.

In one embodiment, the press or mold comprises metal structural parts, which allow for powder coating, e.g. by grounding of the metal part(s) onto which powder is to be deposited.

In one embodiment, a layer formed by the particles, in particular particles powder can be separately deposited, and optionally heated, on a transfer substrate, such as a metal plate and then transferred against the surface of the article. When needed, the surface of the transfer substrate can be coated with a release layer, such as a tetrafluoroethylene layer or a silicone layer.

The texture of the pressing surface influences the surface finish of the coating. In one embodiment, the pressing surface is smooth or essentially smooth to achieve a smooth coating surface. In one embodiment, the pressing surface has a microcoarse or coarse surface texture to achieve tactility or a haptic feel of the surface.

In the foregoing embodiments, heating is carried out at a temperature of 50 to 300 °C, and the heating lasts for at least 0.5 seconds, in particular for 1 to 240 seconds, for example 5 to 120 seconds.

By the pressing and heating, a polymeric film or matrix, in particular a continuous film or matrix of the polymer, is formed on the surface of the fibrous article.

In one embodiment, the coating, comprising a polymer film or matrix, attaches to the surface of the fibrous article without the use of any separate binder.

Typically, the thickness of the polymeric coating is about 1 to 500 µm, for example about 10 to 150 µm.

The surface weight of the coating on the surface of the article is typically about 5 to 150 g/m², for example 10 to 100 g/m², or 15 to 50 g/m²

By repeating the steps, further layers, overlapping with the previous one(s), can be formed on the surface of the fibrous article. By forming several layers, the properties of the coating can be modified.

In one embodiment, a plurality of overlapping layers is formed by first applying onto the surface of one or more first layers formed from polymeric particles, for example in the form of a powder, and then one or more second layers formed by dispersion coating.

In one embodiment, a plurality of overlapping layers are formed by first applying onto the surface of one or more first layers by dispersion coating, and then one of more second layers formed from polymeric particles, for example in the form of a powder.

In one embodiment, which can be combined with any of the above embodiments wherein particles are used in the form of a powder, forming of a layer of the powder is carried out by powder coating, in particular by electrostatic coating.

One particular embodiment comprises the steps of
- providing a powder containing polymeric particles;
- applying onto the surface of the article a layer of the powder by electrostatic coating to provide a powdered surface; and
- subjecting the thus obtained powdered surface to pressing at an elevated temperature to form a polymeric coating on the surface.

In one embodiment, such an electrostatic coating is carried out by positively charging the surface of the fibrous surface - or of a mold surface - and negatively charging the powder before applying the powder onto the surface.

The powder can be applied onto the surface for example by means of electrostatic spraying.

One embodiment comprises spraying of the powder through the nozzle of an electrostatic spray gun. The electrostatic spray gun can be supplied with a mixture of air and powder, for example by feeding such a mixture to the electrostatic spray gun from a mixing chamber where particles are mixed with air. The mixing chamber can include a fluidized bed of particles.

One further embodiment comprises carrying out by the steps of
- providing a positively charged surface of the fibrous article or of a mold part,
- providing a negatively charged powder of polymeric particles;
- contacting the surface of the fibrous surface or of a mold part with a gas phase containing the negatively charged powder particles; and
- allowing the negatively charged powder particles to deposit onto the surface of the fibrous article or of the mold part.

In one embodiment, the surface of the fibrous article is heated before application thereon of a layer of the polymeric particles, especially the powder of polymeric particles.

In one embodiment, the fibrous article has a moisture content of less than 20 wt%, in particular less than 15 wt%, for example about 1 to 10 wt% before being subjected to mechanical pressing. To that aim, the fibrous article is preferably dried by heating in dry air or by application of vacuum or a combination thereof.

By the above embodiments, a fibrous article having a porous surface with a coating layer, such as a polymer coating layer, can be obtained.

In one embodiment, a powder containing thermoplastic particles of a biopolymer is mixed with particles selected from the group of organic and inorganic particles and particles of thermosetting polymers and combinations thereof, the amount of thermoplastic particles being 10 to 100 wt%, in particular 50 to 99 wt% of the total weight of the particles of the powder.

In one embodiment, the powder comprises particles of radiation curable polymer (e.g. UV curable polymer), in particular polymers containing cross-linking unsaturated groups. The particles can also comprise thermally curable polymers.

Thus, the polymeric material can, for example, be selected from the group consisting of polyesters, epoxy, polyurethane, acrylic and monomers and oligomers of one or more of said polymers and copolymers optionally in combination with polysiloxanes and monomers and oligomers and mixtures thereof.

As disclosed herein, a coated fibrous article is obtained, typically exhibiting a continuous film or matrix formed by a thermoplastic polymer or thermosetting polymer or combinations thereof on its surface.

By employing a polymeric powder comprising, or consisting of, or consisting essentially of, a thermoplastic biopolymer of a polyester, optionally in combination with silane monomers, oligomers or polymers, optionally having a melting point of 70 to 160 °C, a biodegradable polymeric coating can be achieved which, when deposited on a fibrous surface, such as a paper or paperboard substrate by powder coating and pressing, will give a recyclable product. Such a product will yield, upon recycling and optionally pulping, a fibrous fraction which can be recycled and optionally reused, and a polymeric fraction, which can be subjected to biodegradation or optionally reuse. In one embodiment, paper or paper board having a grammage of 30 to 500 g/m² is coated with such a biopolymer powder which when heated and pressed onto the paper or paperboard a coating of 15 to 50 g/m².

In one embodiment, a coated article, for example of the foregoing kind, exhibits one or more of the following barrier properties:
- Olive oil resistance: no stain after two hours, at a temperature of 40 ⁰C,
- Cobb 24 h: less than 10 g/m², at a coating amount 30 g/m², for example measured by ISO 535:2014, and
- WVTR (23 ⁰C, 50% RH): less than 75 g/m²/24 h, at a coating amount of 30 g/m², for example measured by ASTM E96 / E96M - 16.

The following non-limiting examples illustrate embodiments.

### Example 1

Paperboard was coated using powder coating and the barrier properties of the coated board were analyzed. The results are presented in Tables 1 to 3.

The materials used were a commercial folding carton board with a basis weight of 200 g/m² and a powder of bio-based polyester powder having a melting point of 80 ⁰C and an average particle size of 97.7 µm.

A number of coated samples were prepared using the following procedure:
The backside (uncoated surface) of the paperboard sample was coated with the powder using electrostatic powder coating to provide a layer having an average thickness of about 500 µm on the surface of the sample.

The sample was then placed in an oven for 30 s, at a temperature of 170 °C. After this, the sample was transferred into a press with a heated upper plate. The temperature, pressing time and pressure were as follows: 200 °C, 5 s, 8 bar.

The barrier properties of the coated paperboard were measured as follows:
Olive oil resistance was measured according to an internal method. A piece of cloth which was impregnated with olive oil was placed on the top of the coated paper board. The sample with the oiled cloth was placed into an oven for two hours. Temperature of the oven was 40 °C. After the oil exposure, the oiled cloth was removed, the excess oil was wiped off and the surface was inspected for stains and impregnation of oil.

Water resistance was measured using a Cobb method, based on "ISO 535:2014 Paper and board -- Determination of water absorptiveness -- Cobb method".

Water vapour transmission rate (WVTR) was measured according to "ASTM E96 / E96M - 16 Standard Test Methods for Water Vapor Transmission of Materials".

**Table 1. Olive oil resistance**

| Coating amount, g/m² | Olive oil test 2h / 40 °C |
|---|---|
| 30 | No stain |
| 22 | No stain |

**Table 2. Water resistance, COBB 24 h**

| Coating amount, g/m² | Cobb 24h g/m² |
|---|---|
| 28 | 5 |
| 34 | 4 |

**Table 3. Water vapour transmission rate**

| Coating amount, g/m² | WVTR at 23 °C/RH 50% g/24h/m² |
|---|---|
| 19 | 116 |
| 24 | 107 |
| 22 | 98 |
| 37 | 80 |

The articles obtained were fully recyclable and exhibited excellent barrier properties against grease and water.

### Example 2

A coated paper board was prepared by transferring the coating layer from a metal plate to the surface of a commercial folding carton board with a basis weight of 220 g/m². The coating was applied onto the uncoated backside of the board.

The preparation steps were as follows:
- A metal plate was coated with a polyester powder (melting temperature 120 °C) by using electrostatic powder coating method.
- Paperboard was placed on the top of the coated metal plate so that the powdered side of the metal plate was facing towards the paperboard.
- Metal and the paperboard were placed between press plates and the plates were closed for 30 s. Several samples were produced with pressures in the range from 1 and to up to 8 bar. The temperature of the press plate was 200 °C.

As a result, the coating layer was successfully transferred from the metal plate to the paperboard. A barrier coating layer of 25 g/m² was achieved on the surface of the board.

The articles were fully recyclable and exhibited excellent barrier properties against grease and water.

### Industrial Applicability

The present technology provides for coated fibrous articles that have predetermined properties, in particular surface properties. Thus, in embodiments articles are provided which have a barrier against at least one of liquids and gases, such as water, oil (including fat penetration and mineral oil migration), oxygen and steam. Such articles are suitable, for example, for food packages, including boxes, containers and wrappings.

In addition to or instead of barrier properties fibrous articles can provided which exhibit properties selected from one or several of fire-resistance, antimicrobial, anticorrosion, conductivity, insulation (including thermal insulation), sound-proofing, UV protection, and/or esthetic properties, such as visual or tactile and/or haptic ("look and feel") properties. The present articles can also be conferred a predetermined color.

The fibrous articles can be stand-alone articles, or they can form part of another object. Examples of the latter include coatings or coverings of substrates, such as coatings and coverings of plates, boards, panels and generally any structural elements and products. For example, in a first step, a sheet or web of fibrous material is coated and, in a second step, the coated web or sheet is transferred and adhered onto a plate, board or panel or other structural element or product. In this way, predetermined properties can be conferred to the structural products.

## Claims

1. Method of producing a coated fibrous article, comprising
- providing a fibrous article having a surface;
- providing polymeric particles;
- forming a layer of the particles; and
- pressing the layer onto the surface to form a polymeric coating on the surface of the article.

2. The method according to claim 1, wherein the fibrous article is selected from the group of webs, blanks, sheets, films, and objects having a 3D-shape, preferably from articles containing cellulosic, lignocellulosic and regenerated cellulosic materials, such as pulp, paper, films, paperboard, fibrous boards and panels, wooden objects cellulosic, lignocellulosic and regenerated cellulosic materials and other shaped fibrous articles, for example in the form of cups, bowls, and cutlery.

3. The method according to any of claims 1 to 2, comprising the steps of providing the polymeric particles in the form of a powder, in particular having a solids content of at least 95 % by weight, preferably comprising applying on the surface a layer containing at least 5 g/m², in particular at least 10 g/m², preferably at least 15 g/m² and up to 250 g/m² of said powder,
wherein the powder is preferably obtained
- by melt mixing of the components followed by grinding,
- by spray drying of the components, or
- by dry mixing of the components in the form of dry powders.

4. The method according to any of the preceding claims, comprising the steps of
- providing a powder containing polymeric particles;
- applying onto the surface of the article a layer of the powder by an electrostatic coating method to provide a powdered surface; and
- subjecting the thus obtained powdered surface to heat and pressing in order to form a polymeric coating on the surface.

5. The method according to any of claim 1 to 4, comprising the steps of
- providing a powder containing polymeric particles;
- forming a layer of the powder; and
- pressing the layer of the powder against the surface of the article,
said steps being carried out in a mold, preferably in a 3D-mold.

6. The method according to claim 5, wherein
- fibrous material placed on a first mold part and a second mold part is powder coated and pressed against the surface of the fibrous material by closing the mold while heating for producing a coated fibrous article by molding; or
- a powder coat is applied on the surface of a fibrous material placed on a first mold part, and a second mold part is pressed against the powder coated surface of the fibrous material by closing the mold while heating to form a coated fibrous article by molding.

7. The method according to any of claims 1 to 2, comprising the steps of providing the polymeric particles in the form of an aqueous slurry, wherein the particles are preferably suspended in water to provide a slurry having a solids content of 1 to 99 wt%, preferably 20 to 80 wt%.

8. The method according to any of the preceding claims, wherein the polymeric particles are selected from particles of thermoplastic materials, thermosetting materials and combinations thereof optionally further containing fillers selected from organic and inorganic materials, such a inorganic particles, wherein the particles preferably have an average particle size of less than 150 micron, in particular less than 100 micron, for example less than 50 micron, and wherein the polymeric particles preferably comprises a polymeric material selected from polyesters, such as polylactic acid, polylactide, polyglycolic acid, polyglycolide, copolymers of lactic acid and glycolic acid, polycaprolatone, polybutylene adipate terephthalate, polybuthylene succinate, polyglycolic acid and polyhydroxyalkanoate, epoxy, polyurethane, acrylic and monomers and oligomers of one or more of said polymers and copolymers optionally in combination with polysiloxanes and monomers and oligomers and mixtures thereof.

9. The method according to any of the preceding claims, wherein the polymeric particles comprise a reaction product of polyester and siloxane monomer, oligomer or polymer, the reaction product having a number average molecular weight of 2,000 to 1,500,000 g/mol, preferably 2,500 to 50,000 g/mol.

10. The method according to any of the preceding claims, wherein the surface is subjected to pressing in a mechanical press, for example using pressing plates, preferably comprising subjecting the surface to pressing using a pressure of at least 1.1 bar(abs), in particular 1.5 to 30 bar(abs), in particular about 1.9 to 12 bar.

11. The method according to any of the preceding claims, comprising carrying out heating and pressing in a succession of heating or pressing steps or to at least one simultaneous heating and pressing step, comprising subjecting the surface to heating in an oven or in a heated press, preferably comprising heating the surface to a temperature of 50 to 300 °C for at least 0.5 seconds, in particular for 1 to 240 seconds.

12. The method according to any of the preceding claims, comprising forming a continuous film or matrix of the polymer on the surface of the fibrous article and optionally comprising forming further overlapping layers on the surface of the fibrous article, preferably comprising forming a plurality of overlapping layers, said overlapping layers preferably comprising one or more first layers formed from polymeric particles in the form of a powder, and one or more second layers formed by dispersion coating.

13. The method according to any of clams 1 to 6 and 8 to 12, wherein coating is carried out by electrostatic coating by positively charging the surface of the fibrous surface or of a mold part and negatively charging the powder particles before applying the powder onto the surface, wherein the powder is preferably applied onto the surface by means of electrostatic spraying, wherein the powder is preferably sprayed through the nozzle of an electrostatic spray gun which is supplied with a mixture of air and powder, in particular from a mixing chamber where particles are mixed with air.

14. The method according to any of claims 1 to 6 and 8 to 13, wherein the electrostatic coating is carried out by deposition of negatively charged powder particles onto the positively charged surface of the fibrous surface by contacting the surface to a gas phase containing said negatively charged powder particles.

15. The method according to any of the preceding claims, wherein the surface of the fibrous article is heated before application thereon of a layer of the polymeric particles, especially powder, and, wherein the fibrous article preferably has a moisture content of less than 20 wt%, in particular less than 15 wt%, for example about 1 to 10 wt% before being subjected to mechanical pressing.

16. The method according to any of the preceding claims, comprising providing a fibrous article having a porous surface with a coating layer, such as a polymer coating layer.

17. The method according to any of the preceding claims, comprising providing a powder containing thermoplastic particles of a biopolymer mixed with particles selected from the group of organic and inorganic particles and particles of thermosetting polymers and combinations thereof, the amount of thermoplastic particles being 10 to 100 wt%, in particular 50 to 99 wt% of the total weight of the particles of the powder, wherein the powder preferably comprises particles of radiation curable polymer, in particular polymers containing cross-linking unsaturated groups.

18. A coated fibrous article obtained by a method according to any of the preceding claims.

19. The coated fibrous article according to claim 18, exhibiting a continuous film or matrix formed by a thermoplastic polymer or thermosetting polymer or combinations thereof on its surface, preferably exhibiting the following barrier properties:
- Olive oil resistance: no stain after two hours, at a temperature of 40 °C,
- Cobb 24 h: less than 10 g/m², at a coating amount 30 g/m², and
- WVTR (23 ⁰C, 50% RH): less than 75 g/m²/24 h, at a coating amount of 30 g/m², and preferably further exhibiting at least one property selected from improved fire-resistance, antimicrobial, anticorrosion, conductivity, insulation, sound-proofing, UV protection, heat reflection, scratch resistance and combinations thereof, and/or esthetic properties, such as visual or tactile and/or haptic properties.

20. The coated fibrous article according to any of claims 18 to 19, obtained by coating paper or paperboard having a grammage of 30 to 500 g/m² with polymeric powder comprising a thermoplastic biopolymer of a polyester optionally in combination with silane monomers, oligomers or polymers which is heated and pressed onto the paper or paperboard to give a coating of 15 to 50 g/m².
